(19) Europäisches Patentamt
European Patent Office
Office européen des brevets

(11) **EP 4 149 134 A1**

(12) **EUROPEAN PATENT APPLICATION**

(43) Date of publication:
**15.03.2023 Bulletin 2023/11**

(21) Application number: **21382809.8**

(22) Date of filing: **09.09.2021**

(51) International Patent Classification (IPC):
*H04W 12/02* (2009.01)   *G06N 3/04* (2006.01)
*G06N 3/08* (2006.01)    *G06N 20/20* (2019.01)

(52) Cooperative Patent Classification (CPC):
**H04W 12/02; G06N 3/045; G06N 3/08;
G06N 20/20; H04L 63/04**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Telefonica Digital España, S.L.U.
28013 Madrid (ES)**

(72) Inventors:
• **KOURTELLIS, Nicolas
  28013 MADRID (ES)**
• **PERINO, Diego
  28013 MADRID (ES)**
• **CHANDRASEKARAN, Varun
  MADISON (WISCONSIN) (US)**

(74) Representative: **Herrero & Asociados, S.L.
Cedaceros, 1
28014 Madrid (ES)**

(54) **METHOD AND SYSTEM FOR PROVIDING DIFFERENTIAL PRIVACY USING FEDERATED LEARNING**

(57)    A method and system for differential privacy using federated learning, comprising:
- at the lowest level (100) of a federated learning framework, federated clients (1001, 1002, 1003) holding private data to be provided with differential privacy, located in different zones (11, 12, 13);
- at the highest level (102), a central aggregator (1000) learning a model with the federated clients (1001, 1002, 1003);
- at least one intermediate level (101) with a super-node (1101, 1102, 1103) located in each particular zone (11, 12, 13), configured to process requests for performing a local FL model update from a subset of the federated clients (1001, 1002, 1003) located in the particular zone (11, 12, 13), aggregate these updates and to add calibrated noise to provide the differential privacy;
each super-node (1101, 1102, 1103) communicating with the central aggregator (1000), and the central aggregator (1000) configured to aggregate the noised updates from the super-node (1101, 1102, 1103) of each particular zone (11, 12, 13) to perform the global federated learning model update.

**FIG. 1**

EP 4 149 134 A1

**Description**

**TECHNICAL FIELD**

The present invention has its application within the information and communications technologies for telecommunication networks, more specifically, relates to machine learning (ML) techniques and more particularly, to methods and systems to provide Federated Learning (FL) as a service for enhancing data privacy. More particularly, the present invention refers to a method and system of Hierarchical Federated Learning (HFL) for providing Differential Privacy (DP).

**BACKGROUND OF THE INVENTION**

Federated Learning (FL) is a paradigm to enable decentralized learning: many federated clients locally, in a decentralized manner, learn a model which they then share with a central aggregator which, in turn, performs a global model update. At each federated round, the central aggregator shares its weights with all federated clients. Note that at any given point in time, only K ≤ N clients may be online; the fraction N/K is termed the user selection probability q. Each client performs training on its private dataset and shares the update with the central aggregator. The aggregator gathers all K updates and performs an aggregation operation (such as average) on them. Then, the central aggregator updates its weights, and uses these updated weights as the starting point for the next federated round.

Apart from enabling more scalable learning, FL is assumed to provide privacy by default, since the data is not shared with any central aggregator. FL provides additional privacy benefits as the data used for training never leave the data owner (or the federated client), as in traditional ML settings where a centralized party collects and has access to data from all participating entities. However, recent work has shown that such federated learning algorithms are susceptible to membership inference - attacks where the private training data can be reconstructed by observing intermediary calculations of the learning algorithm. By observing the client updates, one may infer sensitive information about the private training data. Additionally, the convergence of the learning algorithm used by the central aggregator (and overall robustness) is subject to both (a) client availability and (b) uniformity of the data distributed among the clients.

Differential privacy (DP) is a formal construct that provides guarantees on privacy leakage of various mechanisms, including stochastic gradient descent, commonly used for empirical risk minimization (a component of learning approaches such as federated learning). The standard definition of DP is proposed by Dwork et al. in "The algorithmic foundations of differential privacy" (Foundations and Trends in Theoretical Computer Science, 9(3-4):211-407, 2014): Let $\varepsilon$ be a positive real number ($\varepsilon$ is also known as the privacy budget) and let A denote a randomized algorithm that takes a dataset as input. The algorithm A is said to provide $\varepsilon$-differential privacy if, for all datasets D1 and D2 that differ on a single element, and all subsets S of the outcomes of running A:

$$\Pr[\mathcal{A}(D_1) \in S] \le e^{\varepsilon} \cdot \Pr[\mathcal{A}(D_2) \in S]$$

where the probability is over the randomness of the algorithm A.

In conventional settings (i.e., not federated learning), when DP is used, it has been shown that DP-based learning algorithms alleviate the aforementioned inference attacks. However, they introduce an inherent trade-off between protecting privacy of the data used to train the model, and utility of the model learned.

The introduction of objective perturbation remains the cornerstone for differentially private learning. "Deep learning with differential privacy" by Abadiet et al. (Proceedings of the 2016 ACM SIGSAC Conference on Computer and Communications Security, pages 308-318, 2016) extends the notion of objective perturbation by proposing a differentially private variant of stochastic gradient descent (SGD), where noise is added to each gradient update calculated, and also discloses a tight analysis of the privacy budget through the moment's accountant.

Formal privacy guarantees in the federated learning setting are provided through differentially private learning, where noise is added to the gradients during training. In the FL setting, until now, differentially private guarantees have been investigated at two levels. At the central server level, noise can be added to the aggregated gradient update happening at the central aggregator (i.e., central DP or CDP). However, this assumes that the clients trust the central aggregator to not perform (malicious) inference on their data before it applies the DP noise. Alternatively, DP noise can be added at the client, locally (i.e., local DP or LDP). This assumes no trust in any actor of the entire federated learning ecosystem. Empirical evidence suggests that the CDP mechanism results in a more accurate (final) model learnt.

However, the traditional model defined earlier, also known as the Central DP (CDP) model, implicitly assumes the existence of a trusted entity that does not deviate from protocol specification and adds the calibrated noise to provide the DP guarantee. To alleviate these trust assumptions, the Local DP (LDP) model assumes that each data contributor adds the noise locally, i.e., in-situ. Such a mechanism has limited knowledge of the overall function being computed on all the data, and overestimates the amount of noise required to provide privacy, and has (been observed to provide) detrimental utility impacts.

The relationship between LDP and CDP is also dependent on the mechanism used to achieve DP. For the Laplacian mechanism, $(\varepsilon, \delta)$-LDP also provides $(\varepsilon, \delta)$-CDP. While both approaches provide safeguards against the inference adversary, they introduce disparate privacy vs. utility trade-offs.

Therefore, there are several privacy problems associated with federated learning which can be mitigated with differential privacy, but there is still a need of providing an enhanced Hierarchical FL-based framework capable of addressing the above stated challenges and drawbacks to improve information privacy.

## SUMMARY OF THE INVENTION

The problems found in prior art techniques are generally solved or circumvented, and technical advantages are generally achieved, by the disclosed embodiments referred to methods and systems which introduce hierarchies in the decentralization process of FL, while still providing formal DP guarantees. An intermediary approach, hereafter called Hierarchical DP (HDP), between local differential privacy (LDP) and central differential privacy (CDP) is provided by adding noise in the hierarchical federated learning (HFL) setting.

The hierarchies introduced in the federated learning are based on the following status quo of FL-based frameworks: clients form or belong to zones; updates from clients within a zone are aggregated by a super-node, and the updates from zones (i.e., from super-nodes) are aggregated at the central aggregator.

In the context of the invention, trust boundary regions and zones are defined as follows: A zone, where clients belong, can be defined as the physical area where devices are connected on the same network or subnetwork and are described by similar motives, incentives and trust for participation into a FL round. Some examples of zones, in which the trust can be assumed to increase within each zone, are the following ones:

- The area of coverage of a Telco antenna in which mobile devices / potential FL clients within the same area are connected over 2G/3G/4G and from which receive mobile network service. Again, due to the possibility of untrusted devices being present in this area or zone, it can be assumed to be less trusted.

- The area of coverage of a Wi-Fi hotspot in a cafe/bar/library, etc., which consequently defines and constrains the set of devices that can be connected to that specific Wi-Fi network. Due to its loose boundaries, this zone can be less trusted from the clients inside it.

- The office router (Wi-Fi/wireless and LAN) of a company that defines a set of devices of coworkers connected to this, more trusted, network.

- The home router (Wifi/wireless and LAN) of a family that defines a set of devices connected to this, more trusted, network.

As opposed to the prior art approaches, where noise is added at the federated clients or at the central aggregator, the present invention in based on adding noise at the super-node. Thus, clients aggregate their (zonal-level) updates through the super-nodes where calibrated noise is added to provide the DP guarantee. By doing so, the present invention provides a learnt model that is more private than the central differential privacy setting, and more utilitarian than the one obtained in the local differential privacy setting. The natural composability of the Gaussian mechanism provides more privacy at the center when noise is added at the super-node, which leads to a privacy amplification.

The operation of hierarchical FL does not add any additional trust assumptions. The hierarchical FL operates through the presence of the super-nodes and how super-nodes are selected determines the trust assumptions associated with the whole protocol for hierarchical FL with DP (i.e., HDP). The proposed HDP protocol preserves algorithmic correctness; that is, any learning property that can be achieved in the FL model is achievable in the hierarchical setting. HDP does not degrade the privacy utilities provided by LDP and not degrade the utility benefits provided by the CDP; in particular, HDP provides advantageous privacy vs. utility trade-offs.

An aspect of the present invention refers to a method for providing Differential Privacy using Hierarchical Federated Learning (i.e., Federated learning with hierarchical clustering of local updates) which comprises the steps defined in independent claim 1.

Another aspect of the present invention refers to a system implementing the method of Hierarchical Federated Learning with Differential Privacy described above.

A last aspect of the present invention is related to a computer program product implementing the aforementioned method and, more particularly, refers to a non-transitory digital data storage medium for storing a computer program which comprises instructions causing a computer executing the program to perform the method for providing differential privacy using federated learning as described above.

The method and system in accordance with the above-described aspects of the invention has a number of advantages with respect to the aforementioned prior art, which can be summarized as follows:

- The present invention shows that the introduction of hierarchies or intermediate layers between the typical sever-client architecture of Federated Learning (FL), along with injected calibrated noise, provides better privacy vs. utility trade-offs in the overall training of the FL model, making the process more privacy-preserving than regular FL embedded with differential privacy (DP). The hierarchical construction, when combined with differentially private learning, is robust to inference adversaries.
- Furthermore, the present invention provides comparable benefit against inference adversaries as in the local DP (LDP) case, i.e., where noise is added at the FL clients.
- Potential adversarial inferences performed by adversaries in super-peer level, such as data interference and reconstruction attacks, can be thwarted by hierarchical federated learning (HFL) with DP, even when an adversarial client is elected as a super-node.
- In the present invention, increasing the value of number of super-peers involved provides better privacy than CDP or LDP, which in turn leads to lower utility on the FL model trained.
- The present invention provides home/office users, as well as mobile users with HFL as a service which could be running on any mobile network device that has access to data, or at the users' owned devices (e.g., mobile phones), as a native application within each participating phone. This service can allow mobile network operators as well as 3rd-party services to build machine learning (ML) models on the users' data, without outporting these data anywhere, since the models are built locally, on-device, and thus they are privacy-preserving.

These and other advantages will be apparent in the light of the detailed description of the invention.

## BRIEF DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

Figure 1 shows a schematic block diagram of a system for differential privacy, DP, based on hierarchical federated learning, according to a preferred embodiment in the present invention.

Figure 2 shows a graphic of the validation accuracy of training DP with three known datasets in three experimental scenarios using different federated learning techniques.

Figure 3 shows a graphic of the validation accuracy as a function of privacy in three experimental scenarios with hierarchical federated learning across three known datasets.

## DESCRIPTION OF EMBODIMENTS

The present invention may be embodied in other specific systems and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

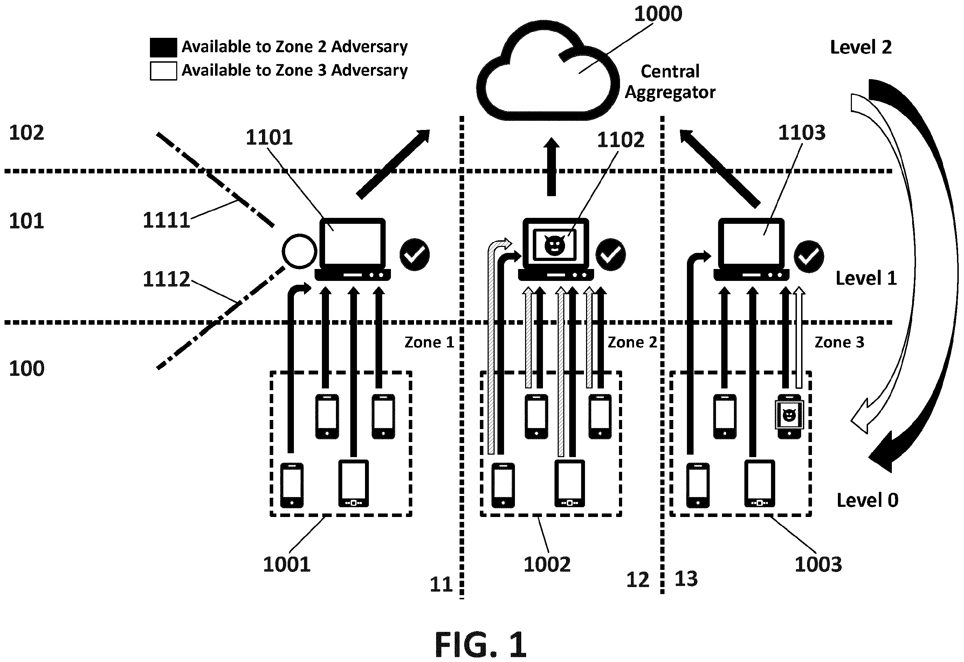

Figure 1 provides an overview of the system architecture that defines the proposed HDP framework (a framework for HFL with DP), in particular in a scenario where adversarial nodes can be present at level 0 or level 1. In the proposed system, locally learnt gradients, from level 0, are perturbed with noise to provide formal DP guarantees at level 1. This ensures that the gradients viewed by the central aggregator at level 2 are less noisy, potentially resulting in a more performant mode.

Recall that federated learning requires $K \leq N$ online federated clients per round to jointly learn a model with the central aggregator. This is a total of two actors, at two conceptual levels (client vs. server). In the ecosystem shown by Figure 1, it is assumed the existence of three main actors, at three different (conceptual) levels of the hierarchy:

- At level 0, i.e., the lowest level (100), there are federated clients (1001, 1002, 1003) holding private data as known in the prior art.
- At level 2, i.e., the highest level (102), the central aggregator (1000) is located, again as known in the status quo.

- The key difference lies in the middle of the system architecture, at level 1, i.e., the intermediate level (101), where an entity called the super-node (1101, 1102, 1103) is located. The super-node (1101, 1102, 1103) is responsible for processing requests from a subset of the online clients (1001, 1002, 1003) in a particular region, henceforth termed a zone (11, 12, 13). Figure 1 shows three zones or client subsets: a first zone (11) or zone 1, a second zone (12) or zone 2, and a third zone (13) or zone 3.

The presence of the intermediate level (101) or level 1 introduces a hierarchical approach to performing FL. The key distinction of the proposed approach with respect to the existing approaches is in how the super-nodes (1101, 1102, 1103) of each zone (11, 12, 13) are chosen: the super-nodes (1101, 1102, 1103) are elected by a pool of their peers and thus are within the same trust boundary/region as their peers. Note that there can be many intermediary layers in practice, but for simplicity of exposition, only one intermediary layer 1 is considered throughout the description of a preferred embodiment.

Hierarchical FL improves the scalability of FL through the tiered architecture. The central aggregator (1000) is no longer required to process and respond directly to the federated clients 1001, 1002, 1003), which are in the order of millions, but only to interact with the super-nodes (1101, 1102, 1103), which are one or two orders of magnitude lower. Additionally, the super-nodes (1101, 1102, 1103) and the clients (1001, 1002, 1003) respectively within a particular zone (11, 12, 13) can perform federated learning independently; this has the potential to further reduce the frequency of interaction with the central aggregator.

Hierarchical DP, HDP as here defined, provides the best of both worlds: CDP and LDP. Based on the construction described above, clients (1001, 1002, 1003) aggregate their updates corresponding to their zone (11, 12, 13) through the respective super-nodes (1101, 1102, 1103) where calibrated noise is added to provide the DP guarantee. Therefore, as shown in Figure 1, for example, at a first super-node (1101) in a first to zone (11), a first step (1111) of zonal aggregation and a second step of noise injection (1112) are performed.

In order to incorporate hierarchical FL with DP for a plurality of S zones, the algorithm included below is applied with some key parameters explained as follows:

- User selection probability, q: it determines the fraction of users per zone that are selected for the protocol. It is also essential for the privacy amplification results (by subsampling).
- Per-user example cap, w: it defines how much the method weighs each user's contribution vs. the other users. Ideally, this weight w is preferred to be equal for all users.
- Noise-scale, z: it is a positive constant used to "scale" the noise added. The larger the value of noise scale, the more noise added, and the more privacy is achieved.
- $\theta$ denotes the model parameters
- $\Delta_k$ denotes the "concatenation of m layers" of the gradients of client k. If there is a superscript, it is used to denote the time step.

Also, in the algorithm below, two complementary functions are used, "UserUpdate" and "ClipFn", explained as follows:

- "UserUpdate" function is responsible for requesting an update of the model from each client participating in a specific zone i, based on their local data, and the specific clipping function applied, ClipFn.
- "ClipFn" function can take two forms: "FlatClip" and "PerLayerClip". Clipping is essential for the application of DP noise. Each layer can be clipped independently, assuming the existence of a global clipping threshold. "FlatClip" function ensures that the concatenation of all of the layers' gradients are clipped with respect to this global threshold S. "PerLayerClip" function ensures that each layer i of the model is clipped with respect to a local threshold $S_i$ such that:

$$\sqrt{\sum_{i=1}^{m} S_i^2} = S$$

```
1:  Parameters
2:  user selection probability q ∈ (0, 1]
3:  per-user example cap ŵ ∈ ℝ⁺
4:  noise scale z ∈ ℝ⁺
5:  UserUpdate (for FedAvg or FedSGD)
6:  ClipFn (FlatClip or PerLayerClip)
7:  Procedure:
8:  Initialize model θ⁰
9:  w_k = min(n_k/ŵ, 1) for all users k
10: for each round t = 0, 1, 2, ... do
11:     for each zone i = 1, 2, ..., S do
12:         C_i^t ← (sample users with probability q)
13:         W = Σ_{k∈C_i^t} w_k
14:         for each user k ∈ C_i^t in parallel do
15:             Δ_k^{t+1} ← UserUpdate(k, θ^t, ClipFn)
16:         end for
```

$$\Delta(i)^{t+1} = \begin{cases} \dfrac{\sum_{k\in C_i^t} w_k \Delta_k^{t+1}}{qW} & \text{for FlatClip} \\[2em] \dfrac{\sum_{k\in C_i^t} w_k \Delta_k^{t+1}}{\max(qW_{min}, \sum_{k\in C_i^t} w_k)} & \text{for PerLayerClip} \end{cases}$$

```
18:         S_i ← (bound on ||Δ_k||_2 for ClipFn)
19:         σ_i ← {zS_i/qW for FlatClip or 2zS_i/qW_min for PerLayerClip}
20:     end for
21:     θ^{t+1} ← θ^t + (1/S) Σ_{i∈[S]} (Δ(i)^{t+1} + N(0, Iσ_i²))
22: end for
```

## Algorithm

From line 11 of this algorithm, it is observed that gradient aggregation first occurs at a zonal level or zone, from 1 to S zones. This in turn leads to recalibration of various parameters, executed in lines 12-19 of the algorithm, required to provide the DP guarantee. Finally, the noised zonal gradients are averaged and aggregated in line 21 of the algorithm. Note that in scenarios where uniform weighting is applied (i.e., the contribution of each client is the same), $w_k$=1.

Additionally, the variance of the noise to be added, denoted as $\sigma_i$ in line 19 of the algorithm, is calculated as a function of the online clients per zone, as noted by the denominator term $qW$ or $qW_{min}$, and not the total fraction of clients across all zones, as W is re-calibrated based on the selected clients per round per zone. The proposed approach calculates the sensitivity based on the clipping bound $S_i$ that is calculated across all clients across all zones; obtaining this information in practice requires additional communication between the super-nodes. Thus, this is approximated through the existence of a global clipping bound C such that:

$$C \geq \max_{i\in[S]} S_i$$

The primary objective for the proposed system architecture is to design hierarchies to understand if there are advantageous privacy vs. utility trade-offs to be obtained. Different approaches that reflect the aforementioned scenarios are described below and the trade-offs are discussed.

The first problem encountered in designing hierarchies is selecting the super-nodes. This is an important problem as the super-node is responsible for adding the noise on behalf of all the federated clients which said super-node obtains the updates from. It is essential that:

a) The super-node(s) and the central aggregator are in different trust regions. If they were in the same region, this would reduce hierarchical FL to the standard CDP scenario. The clients could instead share the data with the server directly.

b) The trust that clients place on the super-node is the same (or comparable) to that they place on themselves. This ensures that the benefits of LDP apply in the new scheme as well.

Candidate approaches to select super-nodes (1101, 1102, 1103) are described below.

A possible approach is exploiting inherent hierarchies. Hierarchies exist in communication networks in the status quo and this information can be used to select super-nodes. Hierarchies are everywhere in our daily computing systems. For example, hierarchies are introduced by the offset of edge computing, where the edge-based base-station serves as an intermediary between the federated clients and the central aggregator. These base stations can act as super-nodes for all clients they serve, in a particular geographic zone. This results in clients having to trust their base station, which in turn has similar pitfalls as the centralized federated learning approach. Other, more "naturally occurring" clusters of clients (e.g., devices in the same household or office network, or play stations joining and participating in the same P2P gaming server) have embedded trust in their formalization and incentives. Clients in such socially-based groups trust one another, and can elect one of them as a super-node for representing them in a possible hierarchical federated learning setting, thus embedding trust from the social layer into the hierarchical layer. An alternative approach is one where clients (randomly) auto-cluster into zones and elect a super-node (e.g., as in the case of file-sharing P2P networks). This requires minimal trust to be placed on any one entity, but has disadvantages when the clients themselves are malicious, and induces communication overhead. Traditionally, the manufacturer of various hardware components placed at the different conceptual levels are different, and this allows us to assume that the federated clients, super-nodes, and central aggregator belong to different trust regions. However, protocols are run in software which are often proprietary to the party learning the model, which in this case is the actor at level 2. In such scenarios, it is unclear if the super-node and the aggregator lie in different trust regions.

A more trustworthy approach is to elect the super-node i.e., the super-node is one of the federated clients. This ensures that the super-node is from a different trust region in comparison to the central aggregator. First, federated clients are grouped into zones. For example, the grouping can be based on geography, or based on compute capabilities, or based on some DHT-type of overlay, etc. Formally, let us assume that there is a total of S zones and each zone $i$ has $N_i \leq N$ federated clients, such that $\Sigma_i N_i = N$ and $\cap_i N_i = \phi$. All online clients in that particular round elect the super-node, i.e., one of the $K_i \leq N_i$ clients are elected as the super-node. Note, however, that the elected super-node has complete purview to the gradients from individual clients, and these gradients are not masked through the addition of DP noise. To this end, secure aggregation protocols can be used to ensure that the super-node gets an aggregate view of the gradients from individual clients. Different election protocols and assumptions are followed for different guarantees. For example, to obtain conventional fault tolerance, a majority of the K clients (i.e., $\geq (K\text{-}1)/2$) must be honest. Similarly, to obtain byzantine fault tolerance, only (K-1)/3 clients in a zone can be adversarial. One key requirement in the proposed setting of the system is that the choice/election of the super-nodes is randomized, i.e., a particular client in a zone has bounded probability of being elected as the super-node, and each of the clients is equally likely to be elected. Also, a different super-node is elected periodically. This randomization may induce additional privacy amplification. A candidate solution for fully-connected graphs such as those used in the proposed setting is presented in "Efficient leader election in complete networks" by J. Villadangos et al. (13th Euromicro Conference on Parallel Distributed and Network-based Processing, pages 136-143. IEEE, 2005).

The possible procedures to select super-nodes from the federated clients have been described above. In any case, the properties that the elected super-node must possess are:

I. The super-node is capable of performing computation with the gradients obtained from the numerous clients in the zone which the super-node is elected in. This computation is fundamentally simple: it involves noise sampling and addition operations.

II. Various clients in the zone may compute their local gradients at different speeds and share the gradients with the super-node. This slowdown problem is further exacerbated due to the reliability factors associated with communication networks. Therefore, the super-node is online for the duration of the round and till it has received all the gradients from the clients online during the round.

III. Clients elected as super-nodes stay as super-nodes for one or a few rounds. Recall that noise aggregation occurs in the super-node and thus the super-node has privy to individual gradients from various clients in the zone. This leaks sensitive information about each client, which is exacerbated with the increasing number of rounds.

IV. There is randomness associated with the election process. This ensures that there is potential for some form of privacy amplification. This also bounds the probability of a malicious/adversarial client to escalate to the position of a super-node frequently.

Despite the presence of the intermediary level, algorithmic correctness must be preserved, i.e., the aggregator has to ensure that the final value that it obtains (and propagates) is the same as that obtained in the baseline Federated Average (FedAvg) scenario. There is a total of S super-nodes in the intermediary level, each responsible for its own zone. Each zone has an equal number of clients. While this simplifying assumption enables easier calculation, this can be relaxed in practice. The federated clients within each zone clip their gradients (as is common in ML) and set the clipping norm to a global constant $C$, i.e., all participants (at any level of the hierarchy) are aware of the clipping threshold. Once these gradients are received, the super-node adds noise after performing the operation listed next. In particular, to achieve correctness, two operations can be performed at the intermediary level:

1) strict summation, where the super-node aggregates the received gradients, or

2) averaging, where the super-node aggregates and averages (by the number of clients in the zone) the gradients received.

Both cases are described below. The analysis here is restricted to a single-level of a hierarchy due to the clarity of exposition. In principle, the presence of $l$ levels of a hierarchy can result in $2l$ different combinations of events (averaging or summation) at each level.

In the Laplace mechanism, $\ell 2$-sensitivity is a function $f: \mathbb{N}^{|\mathcal{X}|} \to \mathbb{R}^d$ is defined as:

$$\Delta_2 f = max_{x,y \in \mathbb{N}^{|\mathcal{X}|}, \, |x-y|_1 = 1} |f(x) - f(y)|_2$$

where $\chi$ denotes some universe (e.g., the universe of all databases).

Case 1: Only summation at the intermediary level

In this scenario, each of the S super-nodes is responsible for aggregating the values from $K/S=m$ clients. Let $c_i$ denote the gradient update of client $i$. After clipping the gradients (using flat clipping), the value of each gradient is $c_i/\lambda$ where $\lambda$ = max (1, $||c_i||2/C$), and $||.||2$ denotes the 2-norm. Thus, when the super-nodes perform summation, the maximum value obtainable is $(m.c_i)/\lambda \leq (m.\gamma)/\lambda$, where $-\gamma < c_i \leq \gamma$, $\forall i$. Gaussian noise (required to provide DP) is added proportional to the f2-sensitivity of the summation function, which is this case is proportional to $1/\lambda$ To ensure correctness in this case, the central aggregator is responsible for averaging (that is, not performed by the super-nodes) and does so over the total of K clients.

Case 2: Averaging at the intermediary level

In this scenario, each of the S super-nodes is responsible for averaging the aggregated values. Thus, the average is calculated as $1/m * \Sigma_i(c_i/\lambda)$. The maximum achievable average is $\gamma/(m*\lambda)$, and thus the $\ell 2$ sensitivity is proportional to $1/m*\lambda$ In such a situation, the central aggregator has to average by the number of super-nodes (i.e., $S$) to preserve algorithmic correctness (since each super-node only averages by the number of clients it is responsible for).
Note that $m>1$. Thus, the $\ell 2$-sensitivity in case 2 is smaller than in case 1. Thus, noise addition in case 2 is lower than that of case 1, ergo utility obtained in case 1 is lower than in case 2. Thus, in the proposed hierarchical FL setup, hierarchies are designed such that the super-nodes always perform averaging.
Formalizing an algorithm to provide differential privacy to be used in a hierarchical federated learning ecosystem has direct implications on the privacy vs. utility trade-off and provides avenues for privacy amplification. In order to analyze the privacy vs. utility trade-off, Gaussian mechanism is introduced: Let $\varepsilon \in (0, 1)$ be arbitrary. For

$$c^2 > 2 \ln \left( \frac{1.25}{\delta} \right)$$ , the Gaussian mechanism with parameter $\sigma \geq c\Delta_2 f/\varepsilon$ is $(\varepsilon, \delta)$ differentially private.

It is known that there exists a connection between local and central-DP if the Gaussian mechanism is used to provide DP properties, as summarized by this lemma: if each of K federated clients obtains $(\varepsilon_{LDP}, \delta)$ local differentially private using the Gaussian mechanism, the central aggregator obtains $(\varepsilon_{CDP}, \delta)$ differentially private, where

$$\epsilon_{CDP} = \frac{\epsilon_{LDP}}{\sqrt{K}}$$ .

Privacy Amplification: By utilizing the Gaussian mechanism for LDP as described above, the central aggregator is able to obtain a more private aggregation of the individual gradients than if it were to use the same parameters $(c, \sigma)$. Such a result is commonly known as privacy amplification in DP literature, and in this case is a natural consequence of using the Gaussian mechanism to provide LDP guarantees. This naturally implies that the learnt aggregate is noisier and has lesser utility.
Implications of Amplification: The aforementioned lemma can be generalized to multiple levels of a hierarchy. If level 0 utilizes the Gaussian mechanism to obtain $(\varepsilon, \delta)$-LDP, then the intermediary level which aggregates the responses from n1 clients obtains $(\varepsilon/\sqrt{n1}, \delta)$-DP; similarly, level 2 which aggregates responses from n2 intermediary level clients and obtains $(\varepsilon/\sqrt{n_1}*n_2, \delta)$-DP, and all the way up to level $l$ which aggregates the responses from $nl$ clients from level $l$-1 and which obtains

$$( \frac{\varepsilon}{\sqrt{\prod_{j=1}^{l} n_l}}, \delta)\text{-DP.}$$

Observe that the privacy increases as the number of levels increases (assuming $n_j > 1$ for all $j \in [l]$).

Consequence on hierarchical FL: Observe that the amplification result allows for stronger privacy (measured at the central aggregator) when noise is added at the super-node. Note that the stage where the noise is added dictates the denominator term in the privacy budget: $\sqrt{K}$ if noise is added at each of the clients, and $\sqrt{S}$ if noise is added at each of the super-nodes. Since $S<K$, the privacy budget when the noise is added at the super-nodes is greater than that when added at the client-level. Intuitively, this suggests that a classifier learnt using hierarchical DP is going to be more utilitarian than one learnt with local DP (as the amount of noise added is lower).

It is assumed that in each round, $K$ online clients (where $2 \leq K \leq N$) jointly train a machine learning, ML, model. Also, it is assumed that for each round, a minority of $\beta$ clients ($1 \leq \beta < K$) are adversarial. The adversaries are passive, i.e., they cannot deviate from protocol specifications, their sole goal is to infer information about the training data of a target client (or group of clients) by analyzing the gradient updates shared during training. The adversaries considered here can view: i) any (gradient) updates they generate, ii) the joint update shared from the central aggregator and iii) the update generated at the intermediary level, if the adversary is located at said level.

The privacy vs. utility trade-off on different datasets and setups have been experimentally studied and demonstrated that the (privacy and utility) performance of hierarchical federated learning sits between local and central differential privacy. Surprisingly, the utility benefits obtained through the described proposal are very close to that obtained by learning a model with central differential privacy. The experiments were performed using three different datasets and suggest that HFL combined with DP produces models as accurate as those obtained using central DP (CDP), i.e., when noise is added at the central FL server aggregator. Through the following described evaluation, based on the datasets and models specified in the proposed framework earlier, the privacy budget $\varepsilon$ calculated at the central aggregator level report is reported and the results show the following technical advantages of the present invention:

1) The proposed hierarchical scheme truly provides advantageous privacy vs. utility trade-offs in comparison to using LDP and/or CDP. Recall that LDP provides more privacy, while CDP is known to provide a more utilitarian model.
2) The proposed hierarchical scheme opens up the attack surface for an adversary wishing to perform membership inference.

In the FL ecosystem, two types of attacks can exist and encapsulate the adversary's goals, which are: i) identify if a particular data point (or a particular attribute within a data point) was used during training, or ii) try to reconstruct the data used for training by another client by observing the gradients shared. These two types of attacks are summarized as follows:

3) Data Inference (DI): It is an attack where an adversarial client can observe the averaged gradients shared during training and infer if a particular data point was used or not (by looking at specific values in the gradient - those that correspond to a feature extractor). This approach is termed membership inference. This approach can further be extended into the adversary attempting to obtain the value of a particular attribute used, i.e., attribute inference.
4) Input Reconstruction (IR): A stronger attack is recovering the data used by reconstructing an input to obtain a particular gradient. In the context of FL, this implies that an adversary who can view the gradient of client(s) can infer what data was used to obtain that gradient, assuming the client performs training on one data point. Empirical results demonstrate successful reconstruction for larger batch sizes.

Note that the reconstruction attack (IR) can capture all effects of the inference attack (DI): once the adversary has access to the exact data used for training, it can also infer if the data point possesses specific properties.

In the experiments, privacy is measured through the calculation of the privacy expenditure or privacy budget ($\varepsilon$).

A combination of Tensorflow-federated v0.16.1 is used for implementation of the proposed approach to provide the components required for FL, and tensorflow-privacy to provide the machinery required for private learning. Such a framework allows us to calibrate for the clipping norm $C$ and the noise multiplier $z$. To ensure correct accounting, the accounting libraries in tensorflow-privacy are modified to accurately reflect sampling probability and number of iterations (in this case, rounds).

To evaluate the efficacy of the approach, the datasets listed in the following Table 1 are considered.

**Table 1**

| Dataset | Size | # Entries | # Classes | Total Clients |
|---|---|---|---|---|
| EMNIST [36] | $28 \times 28 \times 1$ | 382705 | 10 | 3383 |
| CIFAR-10 [37] | $32 \times 32 \times 3$ | 60000 | 10 | 500 |
| CIFAR-100 [38] | $32 \times 32 \times 3$ | 60000 | 100 | 500 |

Only the EMNIST dataset is modified to exhibit the non-i.i.d property that is commonly associated with federated learning. The datasets follow a standard 80:20 split (80% is used for training, and the remaining is used for validation). All the experiments were executed on a server with 2 NVidia Titan XP with 128 GB RAM and 48 CPU cores running Ubuntu 20.04.2. Only a single run of each configuration is performed.

For all the experiments (unless explicitly specified otherwise), a setup where K=100 users are randomly sampled per federated round is considered. Federated averaging, FedAvg, is used as the algorithm of choice, and each client performs local training for five epochs. Federated learning is performed for 200 rounds. All participating clients using SGD as the learning algorithm, with a learning rate of 0.02 (this includes clients that are super-nodes). The server's learning rate is set to one. The clipping norm for DP training was set to 0.05.

1) Privacy vs. Utility Trade-Off

Firstly, training is performed without DP (baseline scenario: no form of DP training is enabled) to get an estimation of the 2-norm of the gradients and estimate the clipping norm (C) to be used during DP training. The training duration (i.e., exact epoch number) at which the validation accuracy saturates is obtained. Afterwards, the noise multiplier (z) is configured so as to enable DP training and log the privacy expenditure ($\varepsilon$) at the end of training.

Different strategies (central vs. local vs. hierarchical) of applying DP noise (i.e., CDP vs. LDP vs. HDP) result in differing values of privacy expenditure. To ensure a fair comparison of privacy vs. utility, the privacy expenditure ($\varepsilon$) in all settings is convert to that of the central DP privacy expenditure using the formulation above described: an intermediary level $l$ which aggregates the responses from $nl$ clients from a previous intermediary level $l$-1 obtains

$$\left( \frac{\varepsilon}{\sqrt{\prod_{j=1}^{l} n_l}}, \delta \right)\text{-DP}.$$

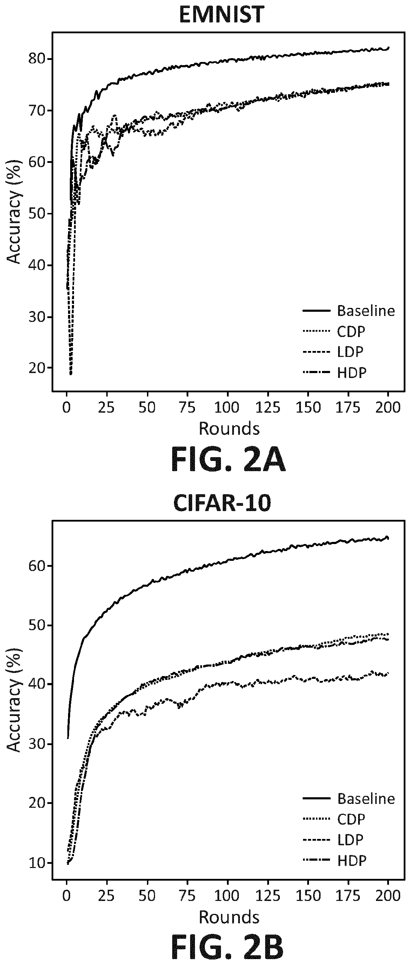

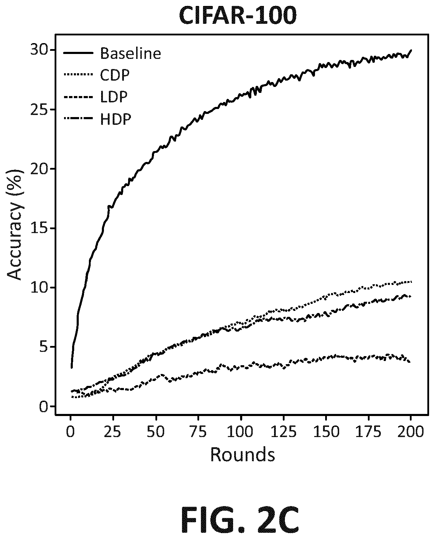

Figure 2 plots the validation accuracy of training with differential privacy or DP for three scenarios: i) central DP or CDP, ii) local DP or LDP, and iii) hierarchical DP or HDP. The validation accuracy is plotted as a function of training duration, for all the considered datasets. These values are plotted in comparison to a baseline scenario, that is, compared with validation accuracy of training without privacy. And this comparison is done for three known datasets: a) EMNIST, b) CIFAR-10, and c) CIFAR-100.

In particular, (a) a shallow 1-hidden layer DNN for EMNIST, and (b) 2-convolution layers followed by 2-fully connected layers for both CIFAR-10 and CIFAR-100. Are considered.

A scenario where there are S=10 super-nodes is considered. Figure 2 shows that HDP achieves better utility than the LDP scenario and is often close to the CDP case across datasets.

More particularly, Figure 2a shows that learning simple tasks such as EMNIST with DP is achievable in all three settings, i.e., the accuracy degradation induced by LDP in comparison to CDP is minimal. However, as expected, HDP provides advantageous trade-offs in terms of accuracy. The results are more interesting for more complex datasets such as CIFAR-10 shown in Figure 2b and CIFAR-100 shown in Figure 2c. First, observe that for the particular configuration considered (N=500, K=100), baseline accuracy is ~63% and ~28% for the two CIFAR versions, respectively. Training with privacy (CDP) degrades this accuracy further. However, HDP is able to provide advantageous trade-offs in terms of privacy and accuracy. Note that CIFAR-100 is naively at least 10x more complex of a learning task than CIFAR-10, and yet HDP achieves similar utility to CDP, and much higher than LDP.

Finally, the following Table 2 contains corresponding values of the privacy budget ($\varepsilon$) achieved at the end of training.

**Table 2**

| Dataset | LDP | HDP | CDP |
|---|---|---|---|
| EMNIST | 0.30 | 0.96 | 3.06 |
| CIFAR-10 | 2.48 | 7.48 | 24.80 |

(continued)

| Dataset | LDP | HDP | CDP |
|---|---|---|---|
| CIFAR-100 | 2.48 | 7.48 | 24.80 |

Observe that the privacy budget ($\varepsilon$) calculated at the end of HDP training is in-between that of the CDP and LDP case. In fact, with nearly a 67% decrease in privacy expenditure, HDP is able to achieve nearly the same accuracy as the CDP case across all the three datasets. The values for CIFAR-10 and CIFAR-100 are the same as the setting values of N and K are the same, and both datasets have the same number of datapoints and trained for the same duration.

2) The Influence of the number *S* of super-nodes:

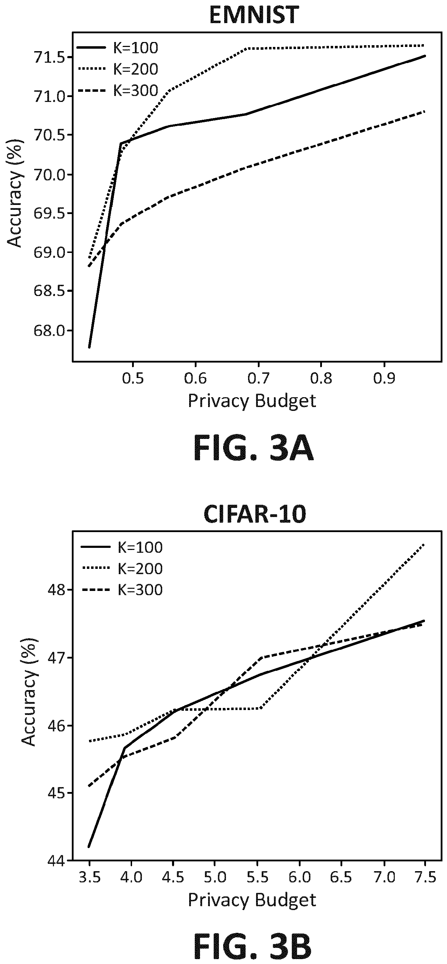

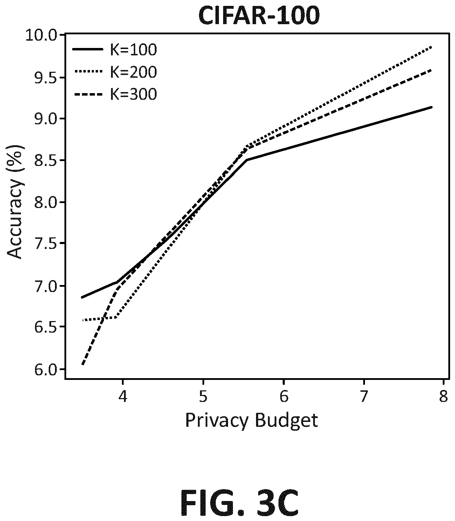

To better understand this hyperparameter, S, an experimental setting is considered where the value of K varies: $K=100$, $K=200$, and K=300. Across these three settings, value of S also varies to one of {10, 20, 30, 40, 50} across all datasets. All other hyperparameters were kept the same as in the earlier experiment. Then the validation accuracy is measured, varying the configurations of C and z to obtain the privacy expenditure ($\varepsilon$). The relationship between the fully trained model's validation accuracy and the privacy budget ($\varepsilon$) expended to achieve it is plotted in Figure 3, which shows that increasing the value of *S* makes the scheme more private (the privacy calculation is inversely proportional to the value of *S*). Figure 3 plots the validation accuracy as a function of privacy budget ($\varepsilon$) by varying the number of super-nodes (*S*) for three scenarios using HDP with different number of parties (*K*), i) $K=100$, ii) $K=200$, and iii) $K=300$, across three known datasets: a) EMNIST, b) CIFAR-10, and c) CIFAR-100. Figure 3 shows that the utility obtained by HDP improves with increasing privacy budget ($\varepsilon$). Across all datasets, a common trend is observed: the validation accuracy calculated increases as the privacy expenditure does. For the three datasets, increasing the value of K does not increase the validation accuracy substantially. This is not indicative of a more general trend; one would assume that increasing the number of parties (*K*) would result in a more accurate model.

Regarding the possible attacks on Federated Learning, the analysis also determines if the proposed hierarchical scheme introduces a new attack surface, through the introduction of adversarial entities at the super-node level as well.

Level 1 adversaries: Privacy attacks at the super-node level are caused by the adversary having complete purview to the gradients from each client reporting to the specific super-node. In such situations, as denoted by Figure 1, the super-node can have direct access to gradients from individual clients and can perform either a DI or an IR attack. Recall that, in the LDP setting, federated clients add noise to the gradients uploaded. Thus, the super-node adversary will not be able to exactly ascertain what was shared by each client, though it can learn some information related to the gradients. Thus, DI is rendered ineffective (as the noise added affects what can be inferred from the visible gradients). In scenarios that federated clients do not add noise, and the super-node is required to perform noise addition (as in the case of HDP), DI can be effective. Noise addition can occur after the super-node has access to unmodified gradients, leading to a successful attack.

Similarly, since the super-node has direct purview to the gradients from the clients, it can perform IR attacks successfully (if the federated clients do not add noise, and the super-node is expected to add noise).

If secure aggregation is indeed used, even if the super-node is adversarial, it only receives an aggregate view leaking no information about each individual client. Thus, both DI and IR are (relatively) unsuccessful. In this case, however, each client needs to communicate with all other clients (for each aggregation, in the worst case), leading to communication complexity that is quadratic in the number of clients. It is also important to note that the aggregation operation is actually performed at the super-node.

There are additional benefits to performing secure aggregation at a zonal level: in a simple setting, assume the existence of *S* zones each with m clients. The net communication cost paid in this case is of the order $S \cdot O(m2)$. However, in the absence of hierarchies, the communication cost that needs to be paid is $O(S2 \cdot m2)$.

Level 0 Adversaries: Scenarios where the adversaries are at level 0, and the noised update (from the central aggregator) is observed. Recall that in FL, the central aggregator adds the (noisy) gradient update to its own weights before propagating anew model for the next round. The noise addition (to the gradient being propagated upwards) can occur at three levels: (a) the clients themselves add DP noise (i.e., a LDP scheme), (b) the central aggregator adds noise (i.e., a CDP scheme), and (c) the super-nodes add noise (i.e., a HDP scheme). Once implemented the attack by known methods, the reconstruction capabilities are measured using the Learned Perceptual Image Patch Similarity (LPIPS) metric. A simple setup with S=2 and K=4 is considered, and where one of these clients is adversarial and wishes to learn the data of the other, when the batch size used is one. The results are presented in the following Table 3.

**Table 3**

| Dataset | LDP | HDP | CDP | Baseline |
|---|---|---|---|---|
| EMNIST | 0.571 | 0.599 | 0.62 | 0.68 |
| CIFAR-10 | 0.423 | 0.452 | 0.494 | 0.596 |
| CIFAR-100 | 0.447 | 0.46 | 0.474 | 0.564 |

Observe that the HDP scheme provides better resilience than CDP but is worse than the LDP scheme. This is explained by the privacy guarantees provided by HDP (which, again, lies between LDP and CDP).

The empirical results obtained in the described experiments show that:

1) The proposed approach provides an advantageous trade-off between utility and privacy, and outperforms the LDP baseline in scenarios where the number of super-nodes (S) is lesser than the number of online clients (K). In particular, for all datasets tested, HDP achieves a 67% decrease in privacy expenditure, while is able to achieve nearly the same accuracy as the CDP case (which is the best-case scenario for the utility of the model).

2) Hierarchical FL is also more resilient to data reconstruction attacks. In the scenario where the super-node is adversarial, then it is able to perform perfect reconstruction (under some assumptions about the volume of data it receives from each client). However, if the client is adversarial, reconstruction efforts are less successful than in the scenario with central DP. In fact, if adversaries are at level 1 (i.e., intermediate or hierarchical level of HDP) and secure aggregation is used in conjunction with HDP, inference attacks are unsuccessful. If adversaries are at level 0 (i.e., local or client level), our proposed HDP provides more resilience than CDP-based approaches.

The description and drawings merely illustrate the principles of the invention.

Although the present invention has been described with reference to specific embodiments, it should be understood by those skilled in the art that the foregoing and various other changes, omissions and additions in the form and detail thereof may be made therein without departing from the scope of the invention as defined by the following claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Note that in this text, the term "comprises" and its derivations (such as "comprising", etc.) should not be understood in an excluding sense, that is, these terms should not be interpreted as excluding the possibility that what is described and defined may include further elements, steps, etc.

**Claims**

1. A method for providing differential privacy using federated learning, wherein private data to be provided with differential privacy is hold by a plurality of online federated clients (1001, 1002, 1003) located in different zones (11, 12, 13) and at the lowest level (100) of a federated learning framework, and wherein the plurality of online federated clients (1001, 1002, 1003) learn a global model with a central aggregator (1000) located at the highest level (102) of the federated learning framework, the method **characterized by** comprising:

   - processing requests from a subset of the online federated clients (1001, 1002, 1003) in a particular zone (11, 12, 13) by a super-node (1101, 1102, 1103) located in the particular zone (11, 12, 13) and at an intermediate level (101) between the lowest level (100) and the highest level (102); wherein the super-node (1101, 1102, 1103) of each particular zone (11, 12, 13) is communicated with the central aggregator (1000);
   - within each particular zone (11, 12, 13), performing a local federated learning model update by the subset of the online federated clients (1001, 1002, 1003) of the particular zone (11, 12, 13), aggregating the updates of the local learnt model from the subset of the online federated clients (1001, 1002, 1003) to the super-node (1101, 1102, 1103) of the particular zone (11, 12, 13), and adding calibrated noise to the super-node (1101, 1102, 1103) to provide the differential privacy;
- aggregating the noised updates from the super-node (1101, 1102, 1103) of each particular zone (11, 12, 13) at the central aggregator (1000) to perform the global federated learning model update.

2. The method according to claim 1, further comprising randomly electing the super-node (1101, 1102, 1103) of the particular zone (11, 12, 13) from the subset of online federated clients (1001, 1002, 1003) located in said particular zone (11, 12, 13), wherein each client of the subset is equally likely to be elected and has a bounded probability of being elected as the super-node (1101, 1102, 1103) of the particular zone (11, 12, 13).

3. The method according to claim 2, wherein the super-node (1101, 1102, 1103) of the particular zone (11, 12, 13) is elected periodically.

4. The method according to any preceding claim, wherein adding calibrated noise to the super-node (1101, 1102, 1103) comprises adding the variance of the noise calculated as a function of the subset of online federated clients (1001, 1002, 1003) per particular zone (11, 12, 13).

5. The method according to any preceding claim, wherein aggregating the updates of the local learnt model from the subset of the online federated clients (1001, 1002, 1003) to the super-node (1101, 1102, 1103) comprises averaging, by the super-node (1101, 1102, 1103) of the particular zone (11, 12, 13), the updates by the number of clients in the subset of the particular zone (11, 12, 13).

6. The method according to any preceding claim, wherein aggregating the updates uses Federated Averaging, FedAvg, as federation learning aggregation technique.

7. A system for providing differential privacy using federated learning, comprising:

- at the lowest level (100) of a federated learning framework, a plurality of online federated clients (1001, 1002, 1003) located in different zones (11, 12, 13), the online federated clients (1001, 1002, 1003) holding private data to be provided with differential privacy;
- at the highest level (102) of the federated learning framework, a central aggregator (1000) configured to learn a model with the plurality of online federated clients (1001, 1002, 1003);

the system being **characterized by** further comprising:

- at least one intermediate level (101) between the lowest level (100) and the highest level (102), and
- at each intermediate level (101) and located in a particular zone (11, 12, 13), a super-node (1101, 1102, 1103) configured to process requests for performing a local federated learning model update from a subset of the online federated clients (1001, 1002, 1003) located in the particular zone (11, 12, 13), the super-node (1101, 1102, 1103) of each particular zone (11, 12, 13) being communicated with the central aggregator (1000);

and wherein the super-node (1101, 1102, 1103) is further configured to aggregate the updates of the local learnt model from the subset of the online federated clients (1001, 1002, 1003) of the particular zone (11, 12, 13) and to add calibrated noise to provide the differential privacy;
and wherein the central aggregator (1000) is further configured to aggregate the noised updates from the super-node (1101, 1102, 1103) of each particular zone (11, 12, 13) to perform the global federated learning model update.

8. The system according to claim 7, wherein the super-node (1101, 1102, 1103) is randomly elected from the subset of online federated clients (1001, 1002, 1003) located in the particular zone (11, 12, 13), each client of the subset being equally likely to be elected and having a bounded probability of being elected as the super-node (1101, 1102, 1103) of the particular zone (11, 12, 13) in which the client is located.

9. The system according to claim 8, wherein the super-node (1101, 1102, 1103) is elected periodically within each particular zone (11, 12, 13).

10. The system according to any of claims 7-9, wherein the super-node (1101, 1102, 1103) is further configured to average the updates from the subset of the online federated clients (1001, 1002, 1003) by the number of clients in the subset of the particular zone (11, 12, 13).

11. A non-transitory digital data storage medium for storing a computer program which comprises instructions causing a computer executing the program to perform the method according to any of the claims 1-6.

**FIG. 1**

## EMNIST

FIG. 2A

## CIFAR-10

FIG. 2B

FIG. 2C

## EMNIST

# FIG. 3A

## CIFAR-10

# FIG. 3B

CIFAR-100

FIG. 3C

Europäisches
Patentamt
European
Patent Office
Office européen
des brevets

# EUROPEAN SEARCH REPORT

Application Number

EP 21 38 2809

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Wainakh Aidmar ET AL: "Enhancing Privacy via Hierarchical Federated Learning", , 23 April 2020 (2020-04-23), pages 1-4, XP055779897, Retrieved from the Internet: URL:https://arxiv.org/pdf/2004.11361.pdf [retrieved on 2021-02-25] * Abstract Sections 1, 3-5 * | 1-11 | INV. H04W12/02 G06N3/04 G06N3/08 G06N20/20 |
| A | KHAN LATIF U ET AL: "Self Organizing Federated Learning Over Wireless Networks: A Socially Aware Clustering Approach", 2020 INTERNATIONAL CONFERENCE ON INFORMATION NETWORKING (ICOIN), IEEE, 7 January 2020 (2020-01-07), pages 453-458, XP033730206, DOI: 10.1109/ICOIN48656.2020.9016505 [retrieved on 2020-02-27] * Abstract Sections I and II * | 1-11 | |
| A | LATIF U KHAN ET AL: "Federated Learning for Internet of Things: Recent Advances, Taxonomy, and Open Challenges", ARXIV.ORG, CORNELL UNIVERSITY LIBRARY, 201 OLIN LIBRARY CORNELL UNIVERSITY ITHACA, NY 14853, 18 June 2021 (2021-06-18), XP081976098, * Abstract Sections I-IV * | 1-11 | TECHNICAL FIELDS SEARCHED (IPC) H04W H04L G06N |

The present search report has been drawn up for all claims

| Place of search | Date of completion of the search | Examiner |
|---|---|---|
| Munich | 4 February 2022 | Bertolissi, Edy |

## REFERENCES CITED IN THE DESCRIPTION

**Non-patent literature cited in the description**

- **DWORK et al.** The algorithmic foundations of differential privacy. *Foundations and Trends in Theoretical Computer Science,* 2014, vol. 9 (3-4), 211-407
- **ABADIET et al.** *Proceedings of the 2016 ACM SIGSAC Conference on Computer and Communications Security,* 2016, 308-318
- **J. VILLADANGOS et al.** 13th Euromicro Conference on Parallel Distributed and Network-based Processing. IEEE, 2005, 136-143